# EUROPEAN PATENT APPLICATION

(11) **EP 4 331 352 A1**
(43) Date of publication of application: **06.03.2024**
(21) Application number: 23169188.2
(22) Date of filing: 21.04.2023
(51) Int. Cl.: A01K 1/015

(54) **LITTER FOR ANIMALS**

(30) Priority: 30.01.2023 IT 202300001401
(71) Applicant: Darino, Raffaele, 21020 Daverio (VA) (IT)
(72) Inventor: Darino, Raffaele, 21020 Daverio (VA) (IT)
(74) Representative: PGA S.p.A., Milano, Succursale di Lugano

(57) **Abstract**

Litter for animals (100), preferably for cats, comprising a plurality of compressed granular elements or pellets (101), wherein each of the compressed granular elements or pellets (101) comprises at least a first portion (102) comprising at least a vegetal element and a second portion (103) of coal.

## Description

### Field of the invention

The invention refers to the field of products for animals and in detail relates to a litter for animals, preferably for cats.

The invention also relates to a method of production of the litter, the related bag and use.

### Known art

Litters are granular compounds suitable for absorbing the dejections, in particular urine and faeces, of pets. It is in particular known the use of litters by cats and other small-sized animals; these animals are typically domestic and are accustomed or accustomable to use the litter.

In particular for cats, the dejections thereof are of particularly pungent odor, a good litter must have absorption capacities of the typical odors of urine and faeces.

Litters for animals, in particular for cats, are divided into two main categories: the ones realized in inert materials and the ones realized in biological materials. Both the categories shall have absorbing capacities for liquids, in particular for liquids of dejections of the animal.

To the first category belong the litters realized with stones or clays such as bentonite, sepiolite, or similar; these litters start therefore from products, that although present in nature are not biological. Litters realized in inert materials are typically not disposable in domestic toilets and must be then thrown in garbage bags, generating heavy waste.

There are known litters produced on the basis of silica gel; these litters have a non-negligible ecological impact.

To the second category belong those litters the composition thereof comprises for a substantial part vegetal products of biological origin, particularly wood.

There are known granular litters which comprise pellets of vegetal material and pellets or coal flakes. Pellets or coal flakes are bulk and separated with respect to the pellets of vegetal material. Pellets or coal flakes are used in order to retain the odors.

The efficacy of bulk pellets or coal flakes is limited, since the contact surface with the urine is minimal.

The purpose of the present disclosure is to describe a litter for animals, and in particular for cats, which allows to mitigate the above-described drawbacks. The purpose of the present disclosure is also to describe a method of production of the above-mentioned litter.

### Summary

In order to mitigate the drawbacks of litters of known type, the Applicant, according to a first aspect, has conceived a litter for animals (100), preferably for cats, comprising a plurality of compressed granular elements or pellets (101), wherein each of the compressed granular elements or pellets (101) comprises at least a first portion (102) comprising at least a vegetal element and a second portion (103) of coal.

According to a further non-limiting aspect, said second portion (103) of coal is a portion of active coal.

According to a further non-limiting aspect, said coal is, or is originated from, granular coal and/or powdered coal and/or flaked coal.

According to a further non-limiting aspect, the second portion (103) of coal is dispersed, preferably uniformly dispersed, within said compressed granular elements or pellets (101) together with said first portion (102) comprising said at least a vegetal element.

According to a further non-limiting aspect, said plurality of compressed granular elements or pellets (101) is a plurality of uniform compressed granular elements or pellets (101), preferably uniform by weight and/or size.

According to a further non-limiting aspect, said second portion (103) of coal is a portion of coal deriving from at least one of the following sources: sources of vegetal origin, comprising at least one among peels, peats, wood, coconut fiber, or fossil sources, comprising at least one among lignite, coal and petroleum pitch.

According to a further non-limiting aspect, the first portion (102) comprising at least a vegetal element is a substantially non-carbonaceous and/or ash-free portion.

According to a further non-limiting aspect, the second portion (103) of coal comprises at least active coal and non-active coal and/or comprises coal deriving from at least a first source and coal deriving from at least a second source different with respect to said first source.

According to a further non-limiting aspect, said at least a vegetal element comprises at least one between wood granulate (104) and herbaceous plant granulate (105).

According to a further non-limiting aspect, said at least a vegetal element comprises a mixture of said wood granulate (104) and of said herbaceous plant granulate (105).

According to a further non-limiting aspect, for each compressed granular element or pellet (101), the amount by weight and/or by volume of the first portion (102) is lower than the amount by weight and/or by volume of the second portion (103),
or for each compressed granular element or pellet (101), the amount by weight and/or by volume of the first portion (102) is greater than the amount by weight and/or by volume of the second portion (103).

According to a further non-limiting aspect, said second portion (103) of coal represents up to 10% by weight of the total weight of said granular element or pellet (101), preferably wherein said second portion of coal constitutes between the 0,5% by weight and the 10% by weight, or between the 1% by weight and the 9% by weight of the total weight of said compressed granular element or pellet (101).

According to a further non-limiting aspect, for each granular element or pellet (101), said first portion (102) constitutes at least the 90% by weight of the total weight of said compressed granular element or pellet (101).

According to a further non-limiting aspect, said first portion (102) constitutes at least between the 90% by weight and the 99,5% by weight, or between the 91 % by weight and the 99% by weight of the total weight of said compressed granular element or pellet (101).

According to a further non-limiting aspect, said herbaceous plant granulate (105) is corn granulate.

According to a further non-limiting aspect, said corn granulate is corn milling granulate.

According to a further non-limiting aspect, said herbaceous plant granulate comprises corn flour.

According to a further non-limiting aspect, said wood granulate (104) comprises Pinaceae granulate, optionally fir granulate.

According to a further non-limiting aspect, said wood granulate (104) comprises at least a natural resin.

According to a further non-limiting aspect, said at least a natural resin acts as control element of odors of animal dejections.

According to a further non-limiting aspect, the litter (100) has a density substantially comprised between 350 kg/m³ and 650 kg/m³, or between 400 kg/m³ and 600 kg/m³.

According to a further non-limiting aspect, in said litter (100), each compressed granular element or pellet (101) comprises an additive present in vegetal organisms configured for reducing the odor of animal dejections and/or comprises a fine dust with agglomerating power.

According to a further non-limiting aspect, said litter (100) comprises an additive present in vegetal organisms configured for reducing the odor of animal dejections and/or comprises a fine dust with agglomerating power; said additive and/or said fine dust with agglomerating power being bulk with respect to said plurality of compressed granular elements or pellets (101).

According to a further non-limiting aspect, the average size of each compressed granular element or pellet (101) is comprised between about 0,1cm and 2cm.

According to a further non-limiting aspect, in said litter (100), each compressed granular element or pellet (101) has a same average size.

According to a further non-limiting aspect, in said litter (100) exist compressed granular elements or pellets (101) of a first average size and compressed granular elements or pellets (101) of a second average size.

According to a further non-limiting aspect, the additive present in vegetal organisms configured for reducing the odor of animal dejections is present in an amount lower than the 7% of the total weight of said compressed granular element or pellet (101).

According to a further non-limiting aspect, said litter (100) is configured for being disposed in WC and/or is compostable.

According to a further non-limiting aspect, said litter (100) presents agglomerating properties, or is an agglomerating litter.

According to a further non-limiting aspect, said additive comprises citric acid.

According to a further non-limiting aspect, said litter (100) is a substantially non-powdery litter.

According to the present disclosure it is furthermore described a method of production of a litter according to one or more of the aspects here described.

According to the present disclosure is furthermore described a method of production of a litter for animals (100) comprising:
- an acquisition of a first quantity (102') of at least a vegetal element;
- an acquisition of a second quantity (103') of coal;
- a step of mixing of the first quantity (102') of said at least a vegetal element and of said second quantity (103') of coal, said step of mixing determining the obtaining of a mixture (M) of said at least a vegetal element and of said coal;
- a step of pelletizing of said mixture (M).

According to a further non-limiting aspect, said mixture (M) is a substantially uniform mixture, preferably wherein the second quantity (103') of coal is dispersed, preferably uniformly distributed within and/or in mixture with said first quantity (102') of said at least a vegetal element.

According to a further non-limiting aspect, the step of pelletizing determines the realization of a plurality of compressed granular elements or pellets (101), wherein each of said compressed granular elements or pellets (101) comprises at least a first portion (102) comprising said at least a vegetal element and a second portion (103) of said coal.

According to a further non-limiting aspect, the step of pelletizing determines the production of a plurality of said compressed granular elements or pellets being uniform (101), preferably uniform for weight and/or size.

According to a further non-limiting aspect, the second quantity (103') of coal is a predefined quantity of active coal, and/or wherein the second quantity (103') of coal is a second quantity, or is originated from a second quantity, of granular coal and/or powdered coal and/or flaked coal.

According to a further non-limiting aspect, the step of pelletizing of said mixture (M) comprises the introduction of said mixture (M) within a pelletizing machine (203), preferably comprising the introduction of said mixture (M) within an input hopper of a pelletizing machine (203), and comprises an activation of compactor organs of said pelletizing machine (203) for the production of said plurality of compressed granular elements or pellets (101).

According to a further non-limiting aspect, said coal originates from at least one of the following sources: sources of vegetal origin, comprising at least one among peels, peats, wood, coconut fiber, or fossil sources, comprising at least one among lignite, coal and petroleum pitch.

According to a further non-limiting aspect, the ratio by volume and/or weight between said first quantity (102') and said second quantity (103') corresponds to the ratio by volume and/or weight between said first portion (102) and said second portion (103).

According to a further non-limiting aspect, the first quantity (102') comprises at least a vegetal element and is a first quantity (102') of a substantially non-carbonaceous and/or ash-free vegetal element.

According to a further non-limiting aspect, said at least a vegetal element comprises at least one among wood granulate (104) and herbaceous plant granulate (105).

According to a further non-limiting aspect, the method comprises a step of mixing of wood granulate (104) and of herbaceous plant granulate (105); the step of mixing determining the obtaining of said first quantity (102').

According to a further non-limiting aspect, said first quantity (102') and said second quantity (103') are in such a way that for each compressed granular element or pellet (101), the amount by weight and/or by volume of the first portion (102) is lower than the amount by weight and/or by volume of the second portion (103),
or, for each compressed granular element or pellet (101), the amount by weight and/or by volume of the first portion (102) is greater than the amount by weight and/or by volume of the second portion (103).

According to a further non-limiting aspect, the second quantity (103') represents up to 10% by weight of the total weight of said second quantity (103') and of said first quantity (102').

According to a further non-limiting aspect, said second quantity (103') of coal constitutes between the 0,5% by weight and the 10% by weight, or between the 1% by weight and the 9% by weight of the total weight of said second quantity (103') and of said first quantity (102').

According to a further non-limiting aspect, said first quantity (102') constitutes at least the 90% by weight of the total weight of said second quantity (103') and of said first quantity (102').

According to a further non-limiting aspect, said first quantity (102') constitutes at least between the 90% by weight and the 99,5% by weight, or between the 91% by weight and the 99% by weight of the total weight of said second quantity (103') and of said first quantity (102').

According to a further non-limiting aspect, said herbaceous plant granulate (105) is corn granulate.

According to a further non-limiting aspect, the method comprises a step of milling of the corn for the production of said corn granulate.

According to a further non-limiting aspect, said herbaceous plant granulate comprises corn flour.

According to a further non-limiting aspect, said wood granulate (104) comprises Pinaceae granulate, optionally fir granulate.

According to a further non-limiting aspect, said wood granulate (104) comprises at least a natural resin; said at least a natural resin acting as control element of odors of animal dejections.

According to a further non-limiting aspect, the step of pelletizing determines the production of a litter (100) the density thereof is substantially comprised between 350 kg/m³ and 650 kg/m³, or between 400 kg/m³ and 600 kg/m³.

According to a further non-limiting aspect, the method comprises a step of addition to the mixture (M) of an additive present in vegetal organisms configured for reducing the odor of animal dejections and/or of a fine dust with agglomerating power.

According to a further non-limiting aspect, the method, after the step of pelletizing, comprises a step of addition of additive present in vegetal organisms configured for reducing the odor of animal dejections and/or comprises a fine dust with agglomerating power; said step of addition determining the fact that said additive and/or said fine dust with agglomerating power are bulk with respect to said plurality of compressed granular elements or pellets (101).

According to a further non-limiting aspect, the step of pelletizing determines the obtaining of a plurality of compressed granular elements or pellets (101) the average size thereof is substantially comprised between 0,1cm and 2cm.

According to a further non-limiting aspect, the step of pelletizing determines the obtaining of a plurality of compressed granular elements or pellets (101) of a same average size.

According to a further non-limiting aspect, the step of pelletizing determines the obtaining of a first plurality of compressed granular elements or pellets (101) of a first average size and the obtaining of a second plurality of compressed granular elements or pellets (101) of a second average size.

According to a further non-limiting aspect, the step of addition to the mixture (M) of an additive present in vegetal organisms configured for reducing the odor of animal dejections and/or of a fine dust with agglomerating power takes place in an amount lower than the 7% by total weight of said first quantity (102') and of said second quantity (103').

According to a further non-limiting aspect, said method is aimed at producing a disposable in WC and/or compostable litter (100).

According to a further non-limiting aspect, said method is aimed at producing a litter (100) with agglomerating properties.

According to the present disclosure is furthermore described a bag comprising a litter realized according to one or more of the aspects here described.

According to a further non-limiting aspect, said bag comprises an inner volume of 5 liters, or 10 liters or 15 liters, and/or comprises a quantity of litter (100) equal to 5 liters, or 10 liters or 15 liters.

According to a further non-limiting aspect, said bag is realized in paper, optionally fully in paper.

According to a further non-limiting aspect, said bag is realized in plastic, optionally fully in plastic.

According to a further non-limiting aspect, said bag comprises at least a first portion realized in paper and at least a second portion realized in plastic.

According to the present disclosure is furthermore described a dosing station for a litter (100) according to one or more of the aspects here described; said dosing station being configured and specifically destined to distribute a predetermined quantity of said litter (100).

According to a further non-limiting aspect, said dosing station is an at least partially automated control station, optionally substantially fully automated.

According to a further non-limiting aspect, said predetermined quantity of litter (100) is fixed.

According to a further non-limiting aspect, said predetermined quantity of litter (100) is determined according to an amount paid by a user.

According to the present disclosure is furthermore described the use of the litter according to one or more of the aspects here described, as the litter (100) for pets, preferably for cats.

### Description of figures

The object of the present disclosure will be hereinafter described in some of its preferred and non-limiting embodiments, with reference to the attached figures, a short description thereof is hereinafter provided.
Figure 1 shows a schematic perspective view of a pellet of a litter for animals.
Figure 2 shows a schematic perspective view of a pellet and provides a basic indication of the content thereof.
Figure 3 shows a schematic view of a process for the production of pellets of the litter object of the present disclosure.

### Detailed description of the invention.

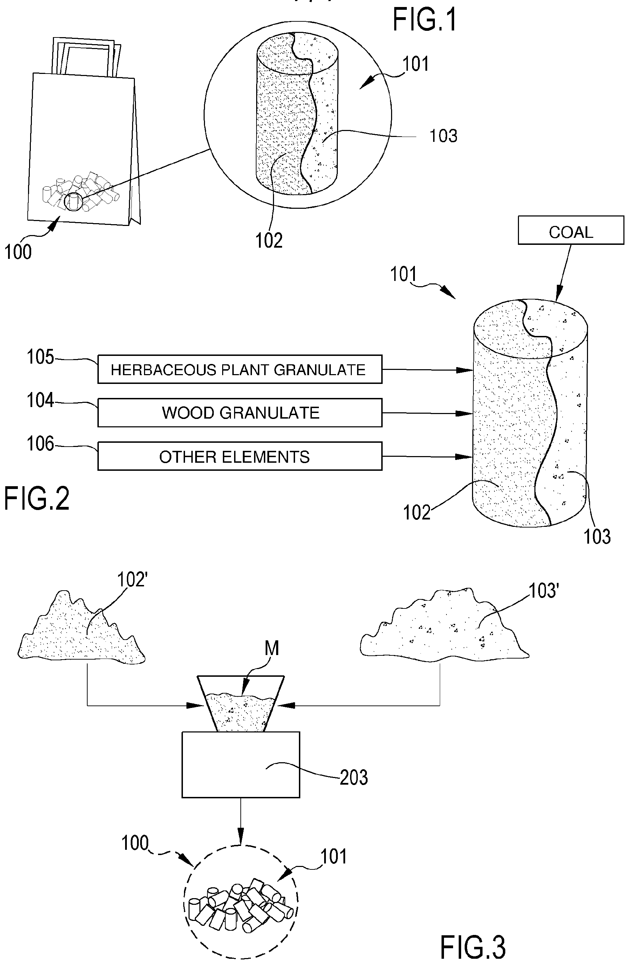

With reference to figure 1, with the reference number 100 it is indicated as a whole a litter for animals. The litter object of the present disclosure is specifically although not limited thereto conceived for the use by cats, the dejections thereof have a particularly pungent odor.

The Applicant, in order to increase the efficiency of retaining odors typical of urine of animals, and in particular - although not limited thereto - of cats, has conceived an ecological litter, that comprises a plurality of pellets or equivalent substantially compressed granular elements, wherein these compressed granular elements or pellets 101 comprise at least:
- a first portion 102 comprising in turn at least a vegetal element;
- a second portion 103 of coal.

The above-mentioned composition is schematically represented in figure 1 and in figure 2 as a granular element or pellet 101 realized in two fractions corresponding to the first portion 102 and to the second portion 103.

Even if in figures 1 and 2 the two fractions appear clearly distinct, due to the mixing carried out on the first portion 102 and on the second portion 103 of material, better described in the following portions of this description, within the volume of each compressed granular element or pellet 101 the second portion 103 of coal is dispersed, in particular substantially uniformly dispersed, together with the first portion 102 comprising at least a vegetal element.

Therefore it should not be intended in a limiting way that a compressed granular element or pellet 101 has two clearly and/or distinctly different parts, one realized in coal and the other realized in said at least a vegetal element. However, this technical solution should not be considered as excluded.

Therefore, the litter 100 object of the present disclosure is characterized by a quantity of compressed granular elements or pellets 101 wherein the at least a vegetal element and the coal are integrated in a single pre-compressed element that is the compressed granular element or pellet 101.

In this way, the contact surface with the urine of the animal is significantly greater with respect to the one that could be found in solutions - as the ones of the known art- wherein the coal is bulk between pellets of other material. Furthermore, the solution conceived by the Applicant provides particular uniformity: ideally, in fact, all the substantially granular elements or pellets have the same composition and this helps in providing the customer with a product of quality and physical characteristics substantially unaltered in time and volume.

The presence of coal allows advantageously to reduce the odors by the filtering and absorbing action of the coal, that has been verified to be particularly effective in reducing the odors typical of the dejections, in particular excrements, of the animals; the anti-odor action of the coal that is dispersed in each compressed granular element or pellet 101 lasts a long time, and this makes the litter 100 here described particularly effective.

Preferably, but non-limiting thereto, the second portion 103 of each compressed granular element or pellet 101 is constituted by active coal.

Either that this second portion 103 is of active coal, or that this second portion is of traditional coal, this second portion 103 of each compressed granular element or pellet 101 is, or is originated from, granular and/or powdered and/or flaked coal.

Clearly, the granulometry of the coal and/or the average size of the flakes of the coal is much lower with respect to the total size of each compressed granular element or pellet 101; this leaves space for the integration of other portions of material into the pellet.

The origin of the coal used for the second portion 103 of pellet can be of different type: in particular, it can be used for example and non-limiting thereto, coal of vegetal origin, deriving from at least one among peels, peats, wood, coconut fiber. Alternatively or in combination with the above, is possible to use coal that derives from fossil sources, for example and non-limiting thereto lignite, coal and petroleum pitch.

For this reason, in a non-limiting embodiment, the second portion 103 of coal can be a second portion of at least a first type of coal and can in turn integrate different types of coal, in particular active coal and non-active coal, or coal deriving from different sources.

Clearly, the first portion 102 of each compressed granular element or pellet 101 is a substantially non-carbonaceous and/or ash-free portion. This moreover allows a clear distinction of the first portion 102 with respect to the second portion 103.

In an embodiment that should not be considered as limiting, the at least a vegetal element comprises at least one between wood granulate 104 or herbaceous plant granulate 105.

The Applicant has conceived different variants of the litter 100 here described, and some of these variants are in such a way that, for each compressed granular element or pellet 101, the amount by weight and/or by volume of the first portion 102 is lower with respect to the amount by weight and/or by volume of the second portion 103. This means that in some embodiments the quantity of coal exceeds, for weight and/or volume, the quantity of said at least a vegetal element.

In other embodiments, on the contrary, for each compressed granular element or pellet 101, the amount by weight and/or by volume of the first portion 102 is greater with respect to the amount by weight and/or by volume of the second portion 103. This means that in some embodiments the quantity of coal is lower, for weight and/or volume, to the quantity of said at least a vegetal element.

These embodiments are the preferred ones, and in particular the Applicant has conceived embodiments wherein the second portion 103 of coal, in particular of active coal, represents up to 10% by weight of the total weight of said compressed granular element or pellet 101.

In a preferred embodiment, the coal constitutes between the 0,5% by weight and the 10% by weight, or between the 1% by weight and the 9% by weight of the total weight of said compressed granular element or pellet 101.

Consequently, the first portion 102 constitutes at least the 90% by weight of the total weight of said compressed granular element or pellet 101.

In the embodiments wherein each pellet 101 of the litter 100 is entirely realized by said first portion 102 and said second portion 103, as consequence of the above, the first portion 102 constitutes at least between the 90% by weight and the 99,5% by weight, or between the 91% by weight and the 99% by weight of the total weight of said compressed granular element or pellet 101.

In a non-limiting embodiment, the second portion 103 comprises a mixture of wood granulate and of herbaceous plant, preferably but non-limiting thereto a mixture of wood granulate and of corn flour. The corn, in fact, is an herbaceous plant.

In the above-mentioned second portion 103, the percentages by weight of wood granulate with respect to the ones of the herbaceous plant can variate between the 10% and the 90%. There can therefore exist embodiments wherein, on the total weight of the second portion 103 of compressed granular element or pellet 101, the 10% of the weight of the second portion 103 is constituted by wood granulate and embodiments wherein, on the total weight of the second portion 103 of compressed granular element or pellet 101, the 90% of the weight of the second portion 103 is constituted by herbaceous plant granulate, in particular by corn flour.

More preferably, the percentages of wood granulate and of herbaceous plant granulate are always mixed in such a way that, in the above highlighted ranges, as the percentage by weight of herbaceous plant granulate increases, the percentage of wood granulate decreases.

In some embodiments of the litter 100 object of the present disclosure, the sum by weight of the percentages of wood granulate and of herbaceous plant substantially leads to a percentage close to the 100% by weight for the second portion 103.

Of the 100% by weight of the second portion 103 of compressed granular element or pellet 101, in an embodiment the wood granulate represents the preponderant part of said second portion 103, whereas in an alternative embodiment the preponderant part is constituted by the herbaceous plant granulate.

In particular, in order to allow an optimal absorption, a good capacity of elimination of the odors and optimizing the possibility of being thrown into the WC, a particular embodiment of the litter object of the present disclosure has the substantially granular elements or pellets 101 the second portion 103 thereof comprises wood granulate in percentage by weight in the range [8-42] % and the herbaceous plant granulate takes on percentage by weight in the range [92-58] %. The percentages here indicated are referred to the 100% by weight of the single second portion 103.

In an embodiment, each compressed granular element or pellet 101 can comprise a third portion 106 of other materials, for example inerts.

The Applicant has found that the so realized mixture comprises optimal properties of odor absorption and good compactness, that allows to safeguard the replacement of the litter as much as possible, as it can be thrown into the WC without risk of clogging it even with significant quantities, and in particular as it can be composted.

In particular, the Applicant has observed that the property of disposal by composting for the litter 100, is as much higher as the ratio between the weight of the wood granulate and the weight of the herbaceous plant granulate is lower.

Preferred embodiments of the litter 100 object of the invention comprise substantially granular elements or pellets 101 the second portion 103 thereof integrates within it fir wood, or more generally wood granulate of plants of the Pinaceae family.

The Applicant has observed that the use of wood granulate of plants of the Pinaceae family allows a considerable absorption of liquids if compared to other types of woods, and in conjunction with this effect, allows to efficiently control the odors of the dejections of the animal.

In fact, fir woods as well as, more generally, the woods of the plants of the Pinaceae family are characterized by the presence of natural resins, the composition thereof comprising terpenes has proved effective in fighting the bad odors of the dejections of the animal, in particular of the cat.

The wood granulate with which is realized the first portion 102 of each compressed granular element or pellet 101 can in its turn derive from wood pellet or be realized from sawdust.

Preferably, but non-limiting thereto, the average size of each compressed granular element or pellet 101 can be comprised between about 0,1cm and 2cm. The choice of the size of the pellet is up to the producer, and - where this is possible - is regulated through the pelletizing machine 203.

In an embodiment, in the litter 100, each compressed granular element or pellet 101 has a substantially same average size. In an alternative embodiment, as result of the production of the pelletizing machine 203 is foreseeable that a first portion of the litter 100 has compressed granular elements or pellets 101 of a first size and that a second portion of the litter 100 has compressed granular elements or pellets 101 of a second size. The first size and the second size can be significantly different from each other. The first and the second size can be included within the above-described sizes.

In order to make the litter object of the invention as environmentally friendly as possible, for the realization of the herbaceous plant granulate is used waste material from the milling of the corn. This allows to leave the main product - precisely the corn - for food applications, using a production process wherein at the same time also the waste material is used in an ecologically efficient manner.

The waste of the corn milling or the flour obtained by the milling of corn kernels that makes the herbaceous plant granulate, is mixed with wood granulate (mainly deriving from sawmill waste), for the realization of the first portion 102 of each compressed granular element or pellet 101, and this intermediate product towards the second portion is mixed with the second portion 103 of each compressed granular element or pellet 101 for originating the mixture that is subjected to the pelletizing process.

The litter object of the present disclosure has agglomerating properties. After the dejection of the animal, the litter 100 tends to form balls that wrap the dejection itself; when formed these balls tend to take on a substantially solid consistency, and not to shatter. The more the 'ball' tends to shatter, the greater is the percentage of litter that is unnecessarily replaced and/or discarded over time.

Optionally, according to the present disclosure, each compressed granular element or pellet 101 of the litter 100 can comprise additional material suitable for and configured for allowing to improve the agglomerating and/or odor-reducing effect of the dejections of the animal.

A first material that the Applicant has observed to be particularly suitable for reducing the odors of the dejections is an additive material of vegetal origin, in particular an acid, that in order not to deteriorate the pellet characteristics of wood granulate and of herbaceous plant granulate is preferably present in percentages not greater than the 7% by weight and - if present - in any case in percentages greater than the 1%, and more in particular in percentages not greater than the 2% and in any case not greater than the 4% by weight with respect to the total weight of the first portion 102 or to the total weight of each compressed granular element or pellet 101.

Preferably, although non-limiting thereto, this acid is citric acid.

Another material that the Applicant has observed be particularly suitable for increasing the aggregating power of the litter 100 is the flour of leguminous materials.

The property of the flour of leguminous plant, both because of its own liquid-absorbing capacity of legumes and because of the reduced size that the flour has with respect to the wood 104 and herbaceous plant 105 granules, allows in practice the granules of flour to penetrate the spaces left between the coupling of the wood 104 and herbaceous plant 105 granules, realizing, after the dejections of the animal, more compact "balls", which tend to have marked robustness and at the same time properties of absorption of liquids.

The use of leguminous plant flour is preferably but non-limiting thereto limited to the 2% by weight in particular if present alone and not in combination with other elements besides the previously mentioned granulates. When the leguminous material flour is introduced in the mixture M together with the aforementioned additive acid, a percentage of 1% by weight of additive acid and 1% by weight of leguminous plant flour can be convenient.

In an embodiment, the above-mentioned additive (citric acid) and/or the fine dust with agglomerating power are uniformly mixed with the above-mentioned at least a vegetal element and with the coal for realizing a mixture M which is then pelletized. In this case it is clear that the litter object of the present disclosure has a plurality of compressed granular elements or pellets 101 each of which integrates within it also the above-mentioned additive and/or fine dust with agglomerating power. In this case, the percentages of 1% by weight of additive acid and/or of 1% by weight of leguminous plant flour can refer to the total weight of the compressed granular element or pellet 101.

In another embodiment, instead, the additive or the fine dust with the above-mentioned agglomerating power are placed bulk in the litter 100.

The litter 100 object of the invention is a biological litter wherein the residual impurities and in particular the inerts, sands and/or granulates of rocky or mineral origin take on a negligible percentage by weight; ideally, the percentage of inerts, sands and/or granulates of rocky or mineral origin are in zero percentage.

The absence of inerts, sands and/or granulates of rocky or mineral origin makes the litter 100, at the same volume, significantly lighter with respect to litters with material of rocky and/or mineral origin such as bentonite or sepiolite. Consequently, the cost resulting from the transport of the litter in large quantities is significantly reduced. For example, the sepiolite has a density of about 2000kg/m³, whereas the density of a fir wood granulate, is around 500-600kg/m³, whereas for the pine this density varies between about 350 kg/m³ and 650 kg/m³. The density of the active coal can be on average estimated at 450 kg/m³.

It can be estimated that, generally, the litter 100 object of the present disclosure has an overall density comprised between 350 kg/m³ and 650 kg/m³, or between 400 kg/m³ and 600 kg/m³.

Therefore, in addition to the previously expressed characteristics, the litter 100 object of the present disclosure is also very convenient to transport for the user and significantly more economical to distribute for the producer with respect to litters with material of rock and/or mineral origin.

It forms furthermore object of the present disclosure a process of production of the litter 100, schematically represented in figure 3.

With specific reference to the figure 3, the process of production of the litter 100, that forms object of the present disclosure too, comprises, generally, the following steps:
- an acquisition of a first quantity 102' of at least a vegetal element;
- an acquisition of a second quantity 103' of coal;
- a step of mixing of the first quantity 102' of said at least a vegetal element and of said second quantity 103' of coal, said step of mixing determining the obtaining of a mixture M of said at least a vegetal element and of said coal;
- a step of pelletizing of said mixture M.

The mixture M is conveniently a uniform mixture, in order to provide uniformity to each compressed granular element or pellet 101.

In figure 3, inside the hopper of a pelletizing machine 203, it is identified a predefined quantity of said mixture M, ready to be pelletized in the plurality of compressed granular elements or pellets 101. Compactor organs of known type, and therefore not described here, are present in the pelletizing machine 203, and are actuated for realizing the plurality of compressed granular elements or pellets 101.

In particular, the step of pelletizing determines the realization of a plurality of compressed granular elements or pellets 101.

The step of pelletizing is a step of pelletization destined to produce uniform compressed granular elements or pellets 101, in particular uniform by size and weight. This is particularly convenient from an aesthetic point of view, as the litter 100 takes on a quality appearance.

Each of said compressed granular elements or pellets 101 comprises at least a first portion 102 comprising said at least a vegetal element and a second portion 103 of said coal.

In particular, the mentioned first quantity of at least a vegetal element and the second quantity of coal can be sufficient for example to realize 100 liters of litter 100, or more.

In light of the preceding description appears clear that, although different in absolute value, the percentages by weight of the first quantity 102' of at least a vegetal element and of the second quantity 103' of coal shall be compared to each other in order to allow to realize compressed granular elements or pellets 101 in the previously described quantities by weight.

More in particular, the ratio by volume and/or weight between said first quantity 102' and said second quantity 103' corresponds to the ratio by volume and/or weight between said first portion 102 and said second portion 103.

In the process here described, the second quantity 103' of coal is a predefined quantity of active coal, and/or the second quantity 103' of coal is a second quantity, or is originated from a second quantity 103' of granular coal and/or powdered coal and/or flaked coal.

Preferably, as already described, said coal originates from at least one of the following sources: sources of vegetal origin, comprising at least one among peels, peats, wood, coconut fiber, or fossil sources, comprising at least one among lignite, coal and petroleum pitch.

In the process of production of the second quantity 103' of coal, if of active type, it is possible to have a step of chemical activation or of gas activation.

The chemical activation of the coal is based on the dehydrating action of some chemical compounds, such as for example phosphoric acid or zinc chloride. The temperature at which it takes place is comprised between 400 and 1000 °C. After the removal of the chemical agent, the active coal has a substantially porous-type structure.

On the contrary, in the gas activation, a gaseous mixture containing oxygen or carbon dioxide is used.

In the step of production of the first quantity 102' of at least a vegetal element, a processing of substantially non-carbonaceous and/or ash-free vegetal elements is carried out. This allows to differentiate in an effective way the processing of the first quantity 102' of material with respect to the processing of the second quantity 103' of material.

If the first quantity 102' derives from a combination of herbaceous plant granulate 105 and of wood granulate 104, the method clearly will comprise a step of mixing of the above-mentioned granulates for obtaining the mentioned first quantity 102' of material. Clearly the step of mixing is aimed at obtaining a first quantity 102' of vegetal material where herbaceous plant granulate 105 and wood granulate 104 are uniformly mixed.

As for the first quantity of at least a vegetal element, it is possible to start from a plant 200 of the Pinaceae family, preferably fir.

By means of machines for sawing or shredding wood 201, for example and non-limiting thereto through the use of machines for the production of boards, roofs and other artefacts, is realized a wood sawdust 202, that typically is a waste of wood processing in itself destined for other applications.

In figure 3, the number reference 203 identifies a pelletizing machine that receives the previously described mixture M, returning as output a plurality of compressed granular elements or pellets 101 ready to be bagged.

In order to produce the litter 100 here described, it is furthermore foreseeable a step of processing of the corn plant through a machine, which carries out a step of separation of a useful product, in particular the kernels of the cob, from a waste material.

It can be in particular provided that the waste material (corn cob) is destined for other uses whereas the useful product undergoes a process of flouring by means of a system from which it comes out a first fine flour destined to and suitable for the human nutrition, a second flour of intermediate granularity (said "middling") destined to and suitable for the feeding in the livestock field and a third flour or product, that represents a processing residue of the flouring of the corn grain, which is subsequently used for realizing the first quantity 102' of material.

If it is present acid material in addition to the first quantity of vegetal element and to the second quantity of coal, this acid material is added in advance to the step of mixing, in order to achieve an effectively uniform mixture before entering the pelletizing machine 203.

The litter 100 is finally preferably bagged in bags of predefined size, such as for example 5l ,10l or 15l. These bags are preferably but non-limiting thereto of paper. For carrying out the bagging, it is convenient to use a moving-wall hopper or equivalent dosing device.

It is finally noted that the form of the compressed granular elements or pellets 101 represented in the attached figures is not to be intended as limiting; in fact, although traditionally a pelletizing machine 203 can advantageously be configured for realizing pellets of substantially cylindrical size, having substantially sharp edges, these compressed granular elements or pellets 101 can have beveled edges or other geometric shapes for example parallelepiped one.

It has previously been said that the litter 100 can comprise an additive and/or a fine dust with agglomerating power. In this case, the method object of the present disclosure can comprise a step of addition to the mixture M of an additive present in vegetal organisms configured for reducing the odor of animal dejections and/or of a fine dust with agglomerating power.

In a particular embodiment, the additive or the fine dust are dispersed between the compressed granular elements or pellets 101. In this case, in the described method, after the step of pelletizing, is present a step of addition of an additive present in vegetal organisms configured for reducing the odor of animal dejections and/or of a fine dust with agglomerating power; said step of addition determines the fact that said additive and/or said fine dust with agglomerating power are bulk with respect to said plurality of compressed granular elements or pellets 101.

In an embodiment, the addition of the additive present in vegetal organisms configured for reducing the odor of animal dejections takes place in the amount lower to the 7% by total weight of the first quantity 102' and of the second quantity 103'.

The advantages of the litter object of the present disclosure are clear on the light of the previous description. In particular, the litter 100 object of the present disclosure is light, easy to transport and to dispose of: being fully biodegradable, the dirty litter and the solid dejections can be disposed of in the WC or in composting.

The litter object of the present disclosure lasts a long time, and allows therefore a saving for the owner of the animal.

In use, the litter object of the present disclosure allows to obtain a compact ball (easy to remove) and immediately neutralizes the odor of urine.

The Applicant observes that 6 liters of litter are sufficient for the need of a cat for about 40/60 days.

The litter object of the present disclosure is antistatic, therefore does not stick to the fur of the animal.

The litter object of the present disclosure is substantially free of loose dusty parts: the animal, after being on the litter, does not have dusty paws and therefore does not leave dusts on the floor. The litter is dust-free, therefore there is no presence of footprints on the floor. The litter 100 object of the present disclosure can therefore be advantageously defined as "non-powdery".

The presence of the coal, and in particular of the active coal, is particularly effective in the reduction of odors of closed toilets.

The litter 100 object of the present disclosure has a low ecological impact.

The litter 100 object of the present disclosure can be conveniently integrated into a bag, for example and non-limiting thereto of volume equal to 5 liters, or 10 liters or 15 liters.

The bag can for example be realized in entirely plastic material, or entirely paper or still be realized in paper/plastic mixed material.

In an embodiment, the bag can be reusable, for example for containing a portion of litter to be disposed of or, on the contrary, for being filled again with additional portions of litter, particularly clean portions.

The Applicant has finally conceived a particular dosing station, for example of semi-automatic or automatic type, that is configured and specifically destined to distribute a predefined quantity of litter 100. The predefined quantity of litter 100 can be determined a priori and be, therefore, fixed, or alternatively or in combination can be defined by the user according, for example and non-limiting thereto, to a quantity of paid money.

In a preferred, but non-limiting, embodiment, the dosing station can integrate therein a pelletizing machine 203.

Through the dosing station here described, the user can go to a sales point, for example a supermarket, and purchase the predetermined quantity of litter 100 by means of supply from said dosing station here described, in a simple way and, if it is the case, in the quantity wanted by him.

It is finally clear that further additions, modifications or variants obvious to a technician in the art can be applied to what is here described, without departing from the scope provided by the attached claims.

## Claims

1. Litter for animals (100), preferably for cats, comprising a plurality of compressed granular elements or pellets (101), wherein each of the compressed granular elements or pellets (101) comprises at least a first portion (102) comprising at least a vegetal element and a second portion (103) of coal.

2. Litter according to claim 1, wherein said second portion (103) of coal is a portion of active coal, and/or wherein said coal is, or is originated from, granular coal and/or powdered coal and/or flaked coal;
the second portion (103) of coal being dispersed, preferably uniformly dispersed, within said compressed granular elements or pellets (101) together with said first portion (102) comprising said at least a vegetal element.

3. Litter according to one or more of the preceding claims, wherein said second portion (103) of coal is a portion of coal deriving from at least one of the following sources: sources of vegetal origin, comprising at least one among peels, peats, wood, coconut fiber, or fossil sources, comprising at least one among lignite, coal, and petroleum pitch.

4. Litter according to one or more of the preceding claims, wherein the first portion (102) comprising at least a vegetal element is a substantially non-carbonaceous and/or ash-free portion,
and wherein the second portion (103) of coal comprises at least active coal and non-active coal and/or comprises coal deriving from at least a first source and coal deriving from at least a second source different with respect to said first source.

5. Litter according to one or more of the preceding claims, wherein said at least a vegetal element comprises at least one between wood granulate (104) and herbaceous plant granulate (105); optionally said at least a vegetal element comprising a mixture of said wood granulate (104) and of said herbaceous plant granulate (105).

6. Litter according to one or more of the preceding claims, wherein, for each compressed granular element or pellet (101), the amount by weight and/or by volume of the first portion (102) is lower than the amount by weight and/or by volume of the second portion (103),
or wherein, for each compressed granular element or pellet (101), the amount by weight and/or by volume of the first portion (102) is greater than the amount by weight and/or by volume of the second portion (103).

7. Litter according to claim 5 and 6, wherein the said second portion (103) of coal represents up to 10% by weight of the total weight of said granular element or pellet (101), preferably wherein said second portion of coal constitutes between the 0,5% by weight and the 10% by weight, or between the 1% by weight and the 9% by weight of the total weight of said compressed granular element or pellet (101).

8. Litter according to one or more of the preceding claims 5 and 6, wherein, for each granular element or pellet (101), said first portion (102) constitutes at least the 90% by weight of the total weight of said compressed granular element or pellet (101),
and/or wherein said plurality of compressed granular elements or pellets (101) is a plurality of uniform compressed granular elements or pellets (101), preferably uniform by weight and/or size;
said litter (100) being substantially non-powdery;
said litter (100) being configured for being disposed of in WC and/or being compostable.

9. Method of production of a litter for animals (100) comprising:
- an acquisition of a first quantity (102') of at least a vegetal element;
- an acquisition of a second quantity (103') of coal;
- a step of mixing of the first quantity (102') of said at least a vegetal element and of said second quantity (103') of coal, said step of mixing determining the obtaining of a mixture (M) of said at least a vegetal element and of said coal;
- a step of pelletizing of said mixture (M).

10. Method according to claim 9, wherein the step of pelletizing determines the realization of a plurality of compressed granular elements or pellet (101), wherein each of said compressed granular elements or pellet (101) comprises at least a first portion (102) comprising said at least a vegetal element and a second portion (103) of said coal,
wherein the second quantity (103') of coal is a predefined quantity of active coal, and/or wherein the second quantity (103') of coal is a second quantity, or is originated from a second quantity, of granular coal and/or powdered coal and/or flaked coal, and/or wherein said coal derives from at least one of the following sources: sources of vegetal origin, comprising at least one among peels, peats, wood, coconut fiber, or fossil sources, comprising at least one among lignite, coal, and petroleum pitch,
wherein the ratio by volume and/or weight between said first quantity (102') and said second quantity (103') corresponds to the ratio by volume and/or weight between said first portion (102) and said second portion (103),
ed wherein said mixture (M) is a substantially uniform mixture, preferably wherein the second quantity (103') of coal is dispersed, preferably uniformly distributed within and/or in mixture with said first quantity (102') of said at least a vegetal element.
